# EUROPEAN PATENT APPLICATION

(11) **EP 2 386 757 A1**
(43) Date of publication of application: **16.11.2011**
(21) Application number: 09837513.2
(22) Date of filing: 06.03.2009
(51) Int. Cl.: F03D 11/04

(54) **FIXING STRUCTURE FOR GENERATOR SHAFT OF WIND DRIVEN GENERATOR OF OUTER ROTOR CORELESS TYPE**

(30) Priority: 07.01.2009 JP 2009001306
(71) Applicant: Noai Co. Ltd., Niigata 950-0952 (JP)
(72) Inventor: HARA, Akio, Niigata-shi Niigata 950-0965 (JP)
(74) Representative: Barth, Stephan Manuel
(86) International application number: PCT/JP2009/054255
(87) International publication number: WO 2010/079627

(57) **Abstract**

A fixing structure for a generator shaft of a wind driven generator of outer rotor coreless type prevents deformation of the generator shaft even in strong wind and has less factors causing failures. In the fixing structure for a wind driven generator (1) of outer rotor coreless type, a screw thread (13) is formed on an end of a generator shaft (13) projecting from a generator body (10) of the wind driven generator (1), the generator shaft (13) projecting from the generator body (10) is fitted in a shaft support body (11) so as to be rotatably supported thereby, and a nut (62) is engaged to the screw thread (13a) of the generator shaft (13) to fasten the generator shaft (13) to the shaft support body (11).

## Description

### TECHNICAL FIELD

The present invention relates to a fixing structure for a generator shaft of a wind driven generator of outer rotor coreless type.

### BACKGROUND ART

In recent years, power generators utilizing various natural energies, such as wind energy and solar energy, are attracting attention from the viewpoint of the reduction of carbon dioxide emission, the reduction of fossil fuel consumption, and the like.

The wind driven generator utilizing wind energy employs a rotor support of, for example, outer rotor type or inner rotor type.

With respect to the wind driven generator of outer rotor type, an intense centrifugal force applies to the outer rotor especially, for example, in strong wind, so that the problem of deforming of the generator shaft and thus incurring a factor of failure frequently occurs. Therefore, it is required for the fixing structure for the shaft supporting body for a generator shaft, the pole of wind power generation equipment, etc. to be reliably strong.

Patent reference 1 discloses a Savonius wind power generation equipment having a Savonius blade attached to a rotor shaft, wherein the rotor shaft is provided along the center axis thereof with a shaft hole having a given length from the lower end thereof, and wherein a generator of outer rotor type with a hollow shaft is attached to the lower end of the rotor shaft.

In patent reference 1, no particular attention has been drawn to the strong fixing structure for the shaft supporting body for a generator shaft, the pole, etc.
Patent reference 1: JP 2007-107496 A

### DISCLOSURE OF THE INVENTION

### PROBLEM TO BE SOLVED BY THE INVENTION

The problem to be solved by the present invention is the absence of any fixing structure for a generator shaft of a wind driven generator of outer rotor coreless type that can prevent deforming of the generator shaft even in, for example, strong wind and thus can reduce failure factors.

### MEANS FOR SOLVING THE PROBLEM

The most characteristic feature of the fixing structure for a generator shaft of a wind driven generator of outer rotor coreless type capable of power generation by utilizing the torque of a wind turbine according to the present invention is as follows. The fixing structure comprises a screw thread provided at an end portion of a generator shaft protruding from a generator main body of a wind driven generator of outer rotor coreless type; and a shaft supporting body configured to fit the generator shaft protruding from a generator main body therein to thereby axially support the same, the shaft supporting body provided with a nut so that the nut is screwed down on the screw thread of the generator shaft to thereby threadedly fix the generator shaft to the shaft supporting body.

### EFFECT OF THE INVENTION

The invention of claim 1 provides a wind driven generator of outer rotor coreless type wherein even when an intense load applies to a generator shaft, deforming of the generator shaft can be prevented to thereby markedly reduce failure factors and wherein the coupling structure of a shaft supporting body to a pole or the like of power generator equipment can be strengthened.

The invention of claim 2 based on the arrangement of a shaft supporting body including a fixed support and a rotary support provides a wind driven generator of outer rotor coreless type wherein, as in the invention of claim 1, even when an intense load applies to a generator shaft, deforming of the generator shaft can be prevented to thereby markedly reduce failure factors and wherein the coupling structure of a shaft supporting body to a pole or the like of power generator equipment can be strengthened.

The invention of claim 3 provides a wind driven generator of outer rotor coreless type wherein even when an intense load applies to a generator shaft of a generator main body including an outer rotor and, housed therein, a single or multistaged coreless coil bodies capable of inversion coaxially with the outer rotor, deforming of the generator shaft can be prevented to thereby markedly reduce failure factors and wherein the coupling structure of a shaft supporting body to a pole or the like of power generator equipment can be strengthened.

### BEST MODE FOR CARRYING OUT THE INVENTION

An object of the present invention is to provide a fixing structure for a generator shaft of a wind driven generator of outer rotor coreless type that can prevent deforming of the generator shaft even in, for example, strong wind and thus can reduce failure factors.

This object has been attained by the fixing structure for a generator shaft of a wind driven generator of outer rotor coreless type capable of power generation by utilizing the torque of a wind turbine according to the present invention, which comprises a screw thread provided at an end portion of a generator shaft protruding from a generator main body of a wind driven generator of outer rotor coreless type; and a shaft supporting body including a fixed support configured to fit the generator shaft protruding from a generator main body therein and axially support the same in a fixed state and a rotary support coupled through a bearing to the fixed support in a coaxial arrangement, the rotary support configured to fit the generator shaft therein and axially support the same rotatably, which shaft supporting body is provided on a lower side of the fixed support with a nut so that the nut is screwed down on the screw thread of the generator shaft to thereby threadedly fix the generator shaft to the fixed support.

### EXAMPLE

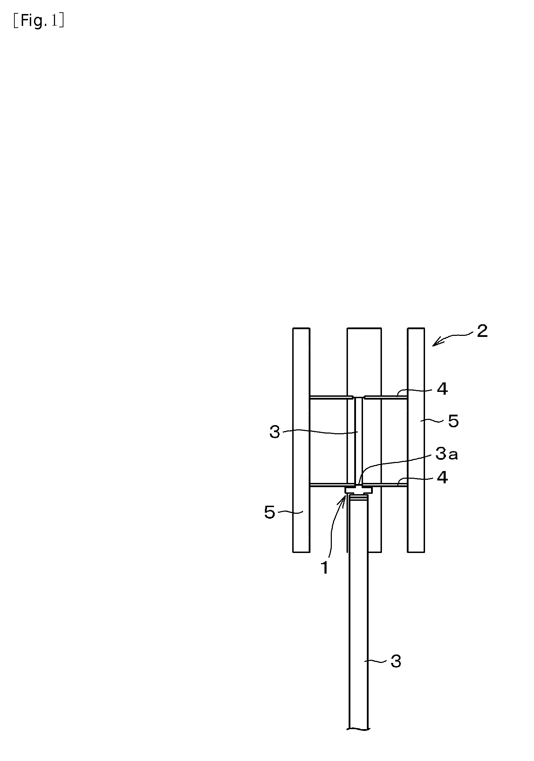

The fixing structure for a generator shaft of a wind driven generator of outer rotor coreless type according to an embodiment of the present invention will be described in detail below with reference to FIGS. 1 to 3.

The fixing structure for a generator shaft 13 of a wind driven generator of outer rotor coreless type 1 according to this embodiment strongly fixes the generator shaft 13 protruding from a generator main body 10 of the wind driven generator of outer rotor coreless type 1 to a shaft supporting body 11.

Referring to FIG. 1, the wind driven generator of outer rotor coreless type 1 according to this Embodiment is disposed between the lower end of, for example, a Giromill type (vertical type) wind turbine 2 and the upper end of a pole 3 supporting the wind turbine 2 so as to hold the same at a given height from the ground. The wind driven generator of outer rotor coreless type 1 is so configured as to gain a power generation output by utilizing the torque of the wind turbine 2 rotating by means of wind energy.

The wind turbine 2 is so structured that, for example, three blades 5 are attached to a wind turbine shaft 3 by means of arms 4, and that the lower end portion 3a of the wind turbine shaft 3 is attached to the wind driven generator of outer rotor coreless type 1.

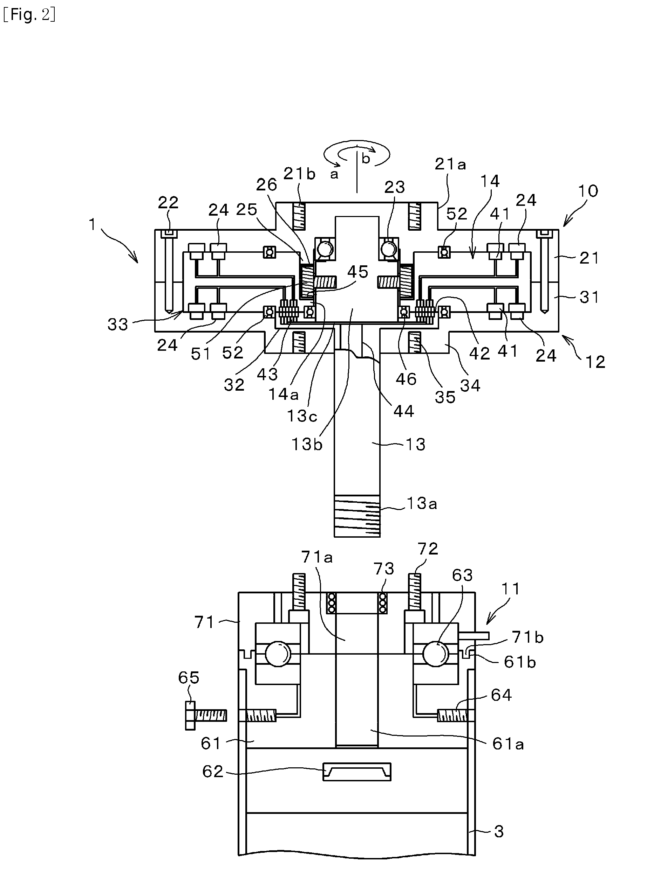

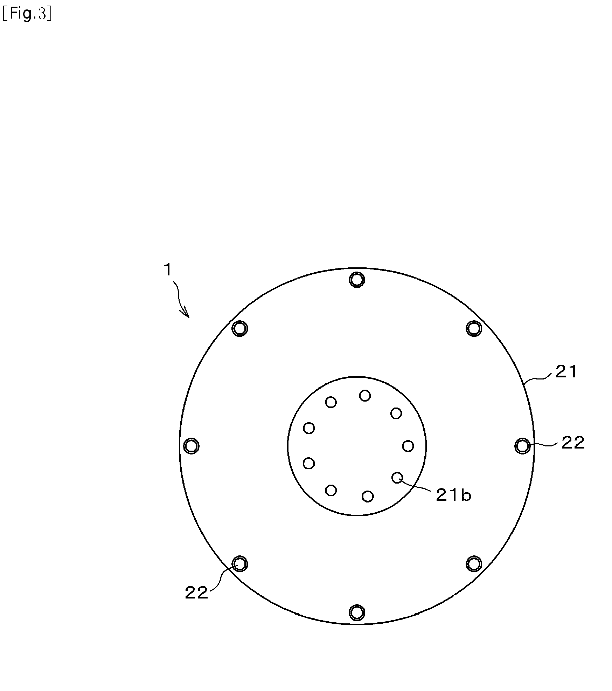

The wind driven generator of outer rotor coreless type 1 will be described in greater detail with reference to FIGS. 2 and 3.

This wind driven generator of outer rotor coreless type 1 includes a generator main body 10 and a shaft supporting body 11 configured to rotatably support the generator main body 10.

The generator main body 10 includes an outer rotor 12 rotated by the torque of the wind turbine 2, a generator shaft 13 axially supporting the center portion of the outer rotor 12 that is configured to rotate the outer rotor 12 and a disk-shaped coreless coil body (coil bundle compressed into a disk shape) 14 housed in the outer rotor 12 while its center portion is supported by the generator shaft 13.

The generator shaft 13 is provided at its lower end with a screw thread 13a and provided on its upper end side with a large-diameter portion 13b. The large-diameter portion 13b is provided on its lower side with a projecting disk portion 13c.

In the outer rotor 12, a pan/disk-shaped upper rotor 21 with an open lower side abuts in a vertical arrangement on a pan/disk-shaped lower rotor 31 with an open upper side. These rotors are fixed together at locations close to the outer circumferences thereof by means of a multiplicity of circularly arranged fixing bolts 22.

With respect to the upper rotor 21 as a constituent of the outer rotor 12, the upper end portion of the generator shaft 13 is fitted in the center area lower side thereof. The center portion thereof is provided with an upper projecting cylindrical wind-turbine attaching portion 21a.

The wind-turbine attaching portion 21a is provided with a multiplicity of circularly arranged screw holes 21b. The wind-turbine attaching portion 21a is caused to abut on the lower end portion 3a of the wind turbine shaft 3, and by means of attaching bolts not shown, the upper rotor 21 and the lower end portion 3a of the wind turbine shaft 3 are bonded together to thereby transmit the torque of the wind turbine shaft 3.

A main bearing 23 is disposed between the upper face side of the large-diameter portion 13b of the generator shaft 13 and the inner bottom portion of the upper rotor 21 close to the upper face side, thereby axially supporting the upper rotor 21, thus the outer rotor 12.

A circular projecting portion 25 having an inside diameter slightly larger than the large-diameter portion 13b is provided in a location outside the main bearing 23 on the inner bottom portion of the upper rotor 21. A circular gear 26 is provided on the entire circumference of the inferior end surface of the circular projecting portion 25.

A required number of magnets 24 are circularly embedded in the inner bottom portion of the upper rotor 21 at its location close to the outer circumference thereof in a fashion such that the end face thereof faces the inner bottom face.

The lower rotor 31 is formed into a configuration approximately vertically symmetric to that of the upper rotor 21. Illustratively, the lower rotor 31 at its center area upper face is provided with a circular recessed tier portion 32 configured to allow the projecting disk portion 13c to gain entrance thereinto. The generator shaft 13 passes through the center area of the circular recessed tier portion 32.

A required number of magnets 24 are circularly embedded in the inner bottom portion of the lower rotor 31 at its location close to the outer circumference thereof in a fashion such that the end face thereof faces the inner bottom face and in a fashion such that they are arranged opposedly to the magnets 24 of the upper rotor 21.

The upper rotor 21 and the lower rotor 31 cooperate to provide thereinside an accommodation chamber 33 for accommodating a coreless coil body 14.

The lower face side of the lower rotor 31 at its center area is provided with a downward projecting cylindrical attaching portion 34. This attaching portion 34 is provided with circularly arranged screw holes 35.

The coreless coil body 14 is disposed coaxially with the outer rotor 12 in the accommodation chamber 33. The coreless coil body 14 at its center area is provided with an upper hole with an inside diameter allowing the circular projecting portion 25 of the upper rotor 21 to gain entrance thereinto and a lower hole having a diameter slightly larger than that of the large-diameter portion 13b of the generator shaft 13 so as to allow the large-diameter portion 13b to pass therethrough.

The coreless coil body 14 is rotatably supported by the generator shaft 13 by means of a bearing 46 disposed between the lower end outer circumference of the large-diameter portion 13b and the lower hole of the coreless coil body 14.

The coreless coil body 14 on its upper face is provided with a coil portion 41 arranged correspondingly to and close to the magnet 24 embedded in the upper rotor 21. Also, the coreless coil body 14 on its lower face is provided with a coil portion 41 arranged correspondingly to and close to the magnet 24 embedded in the lower rotor 31.

Coil portion output terminals 42 of the upper and lower coil portions 41 of the coreless coil body 14 are disposed in a location facing the lower face of the coreless coil body 14 and in a fashion opposed to the projecting disk portion 13c of the generator shaft 13 positioned in the circular recessed tier portion 32.

Power generation output from the generator main body 10 is withdrawn through the brushes (current collector) 43 disposed correspondingly to the coil portion output terminals 42 provided on the upper face of the projecting disk portion 13c and through an output cable 44 connected to the brushes 43.
In place of the coil portion output terminals 42 combined with the brushes 43, use can be made of, for example, a brushless current collector or a sparkless current collector.

A circular projecting portion 14a defining the lower hole of the coreless coil body 14 on its upper face side (upper hole side) is provided on the entire circumference thereof with a circular gear 45 similar to the circular gear 26 of the circular projecting portion 25.

A plurality of reversing gears 51 located in the upper hole and having their rotating shafts arranged in a horizontal direction are attached to the outer circumference of the large-diameter portion 13b of the generator shaft 13. The reversing gears 51 interlock with the circular gear 26 and the circular gear 45.

By virtue of this arrangement, when the outer rotor 12 is rotated in the direction of arrow a as shown in FIG. 2, the coreless coil body 14 is reversely rotated by means of the reversing gears 51 in the direction of arrow b as shown in FIG. 2.

Namely, the outer rotor 12 and the coreless coil body 14 are configured to conduct coaxial inversion by means of the reversing gears 51.

Now, the shaft supporting body 11 will be described in detail. The shaft supporting body 11 is configured to allow the generator shaft 13 to fit through its center hole 61a and protrude downward, and has a stacked structure composed of a fixed support 61 configured to fixedly support the generator shaft 13 by screwing a nut 62 on the screw thread 13a of the generator shaft 13 from downside and a rotary support 71 disposed in close relationship on the fixed support 61 which is provided in its center area with a through-hole 71a having the same diameter as that of the center hole 61a, through which the generator shaft 13 passes.

Namely, an arrangement is made such that the rotary support 71 is rotatably supported by the fixed support 61 by means of a bearing 63 disposed therebetween, and such that the rotary support 71 can be smoothly rotated in close relationship on the fixed support 61 by fitting a circular ridge 71b provided on the lower face outer circumference region of the rotary support 71 in a circular groove 61b provided on the upper face outer circumference region of the fixed support 61.

The fixed support 61 at its side face is provided with screw holes 64 arranged orthogonal to the axial direction of the center hole 61a. An arrangement is made such that the shaft supporting body 11 is attached to the upper end portion of the pole 3 by means of bolts 65 by fitting the upper end portion of the pole 3 from downside of the fixed support 61.

The rotary support 71 is provided with attaching bolts 72 arranged correspondingly to the screw holes 35 of the attaching portion 34 of the lower rotor 31. In the stage prior to assembling the rotary support 71 and the fixed support 61, the rotary support 71 is attached to the lower rotor 31. Thereafter, the fixed support 61 is fitted to the rotary support 71.

A support bearing 73 for the generator shaft 13 is disposed in the upper end portion of the through-hole 71a of the rotary support 71.

In FIG. 2, numeral 52 denotes roller bearings respectively disposed between the upper rotor 21 and the coreless coil body 14 and between the lower rotor 31 and the coreless coil body 14.

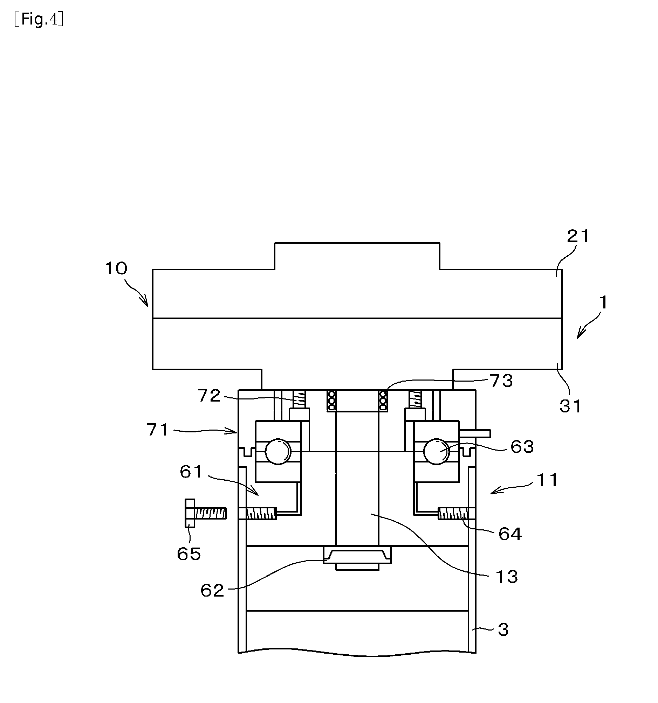

Below, the structure for fixing the generator shaft 13 of wind driven generator of outer rotor coreless type 1 defined above to the shaft supporting body 11 will be described referring also to FIG. 4.

In the stage of fitting and fixing of the generator shaft 13 of wind driven generator of outer rotor coreless type 1 in the shaft supporting body 11, the generator shaft 13 is first fitted in the through-hole 71a of the rotary support 71 and then the center hole 61a of the fixed support 61 so that the screw thread 13a provided on the generator shaft 13 is caused to protrude in the lower portion of the fixed support 61.

Thereafter, the nut 62 is screwed down on the screw thread 13a to thereby effect fastening and fixing as shown in FIG. 4. Thus, the lower end side of the generator shaft 13 can be strongly fixed to the lower portion of the fixed support 61.

By virtue of the structure for fixing the generator shaft 13 to the shaft supporting body 11 according to this Embodiment, even when, for example, the wind turbine 2 is rotated at a high speed by strong wind with the result that an intense load applies through the outer rotor 12 of the wind driven generator of outer rotor coreless type 1 to the generator shaft 13 thereof, the generator shaft 13 can be strongly supported by the fixed support 61 and deforming of the generator shaft 13 can be prevented to thereby markedly reduce failure factors.

The structure for fixing the generator shaft 13 to the shaft supporting body 11 according to this Embodiment attains strong fixing of the lower end side of the generator shaft 13 to the lower portion of the fixed support 61. Therefore, referring to FIG. 2, the presence of the generator shaft 13 poses no problem in the structure for coupling the shaft supporting body 11 to the pole 3 in which the shaft supporting body 11 is attached to the upper end portion of the pole 3 by means of the bolts 65, so that the advantage that the structure for coupling the shaft supporting body 11 to the pole 3 can be strengthened is ensured.

In the above wind driven generator of outer rotor coreless type 1, the generator main body 10 has a single coreless coil body 14 arranged in the outer rotor 12. This is nonlimiting, and two-staged, three-staged, four-staged, or further multistaged coreless coil bodies can be disposed in the outer rotor of the wind driven generator of outer rotor coreless type. In these forms as well, the effects of prevention of deforming of the generator shaft 13 leading to marked reduction of failure factors and strengthening of the structure for coupling the shaft supporting body 11 to the pole 3 can be exerted by employing the above fixing structure.

### INDUSTRIAL APPLICABILITY

The present invention can find wide applications in not only the above wind driven generator coupled to a Giromill type wind turbine but also wind driven generators of outer rotor type coupled to various wind turbines of Darrius, Savonius and other vertical shaft type so as to conduct power generation. Further, the present invention can be applied to not only the outer rotor coreless structure but also conventional wind driven generators with an outer rotor/stator structure.

### BRIEF DESCRIPTION OF THE SEVERAL VIEWS OF THE DRAWING

FIG. 1 is a schematic view of a wind power generator equipment including a wind driven generator of outer rotor coreless type according to Embodiment of the present invention.
FIG. 2 is a schematic exploded sectional view of a wind driven generator of outer rotor coreless type according to the Embodiment.
FIG. 3 is a schematic plan view of a wind driven generator of outer rotor coreless type according to the Embodiment.
FIG. 4 is a partial sectional view of a structure fixing a generator shaft to a shaft supporting body according to the Embodiment.

### Definition of Mark

- 1: wind driven generator of outer rotor coreless type
- 2: wind turbine
- 3: pole
- 3: wind turbine shaft
- 3a: lower end portion
- 4: arm
- 5: blade
- 10: generator main body
- 11: shaft supporting body
- 12: outer rotor
- 13: generator shaft
- 13a: screw thread
- 13b: large-diameter portion
- 13c: projecting disk portion
- 14: coreless coil body
- 14a: circular projecting portion
- 21: upper rotor
- 21a: wind-turbine attaching portion
- 21b: screw hole
- 22: fixing bolt
- 23: main bearing
- 24: magnet
- 25: circular projecting portion
- 26: circular gear
- 30: intermediate rotor
- 31: lower rotor
- 32: circular recessed tier portion
- 33: accommodation chamber
- 34: attaching portion
- 35: screw hole
- 41: coil portion
- 42: coil portion output terminal
- 43: brush
- 44: output cable
- 45: circular gear
- 46: bearing
- 51: reversing gear
- 52: roller bearing
- 61: fixed support
- 61a: center hole
- 61b: circular groove
- 62: nut
- 63: bearing
- 64: screw hole
- 65: bolt
- 71: rotary support
- 71a: through-hole
- 71b: circular ridge
- 72: attaching bolt
- 73: support bearing

## Claims

1. A fixing structure for a generator shaft of a wind driven generator of outer rotor coreless type capable of power generation by utilizing the torque of a wind turbine, comprising:
a screw thread provided at an end portion of a generator shaft protruding from a generator main body of a wind driven generator of outer rotor coreless type, and
a shaft supporting body configured to fit the generator shaft protruding from a generator main body therein to thereby axially support the same, the shaft supporting body provided with a nut so that the nut is screwed down on the screw thread of the generator shaft to thereby threadedly fix the generator shaft to the shaft supporting body.

2. A fixing structure for a generator shaft of a wind driven generator of outer rotor coreless type capable of power generation by utilizing the torque of a wind turbine, comprising:
a screw thread provided at an end portion of a generator shaft protruding from a generator main body of a wind driven generator of outer rotor coreless type, and
a shaft supporting body including a fixed support configured to fit the generator shaft protruding from a generator main body therein and axially support the same in a fixed state and a rotary support coupled through a bearing to the fixed support in a coaxial arrangement, the rotary support configured to fit the generator shaft therein and axially support the same rotatably, which shaft supporting body is provided on a lower side of the fixed support with a nut so that the nut is screwed down on the screw thread of the generator shaft to thereby threadedly fix the generator shaft to the fixed support.

3. The fixing structure for a generator shaft of a wind driven generator of outer rotor coreless type according to claim 1 or 2, wherein the generator main body includes an outer rotor and, housed therein, a single or multistaged coreless coil bodies capable of inversion coaxially with the outer rotor.
